# EUROPEAN PATENT APPLICATION

(11) **EP 4 592 826 A1**
(43) Date of publication of application: **30.07.2025**
(21) Application number: 22965267.2
(22) Date of filing: 14.11.2022
(51) Int. Cl.: G06F 8/65, G06F 11/34, G06F 11/30, H04L 67/1396, H04L 12/28, G06N 3/08

(54) **ARTIFICIAL INTELLIGENCE DEVICE AND INTEROPERATION DEVICE UPDATING METHOD THEREFOR**

(30) Priority: 08.11.2022 KR 20220147798
(71) Applicant: LG Electronics Inc., Yeongdeungpo-gu Seoul 07336 (KR)
(72) Inventor: KIM, Jaehong, Seoul 06772 (KR)
(74) Representative: Vossius & Partner Patentanwälte Rechtsanwälte mbB
(86) International application number: PCT/KR2022/017868
(87) International publication number: WO 2024/101495

(57) **Abstract**

The present disclosure relates to an artificial intelligence apparatus capable of updating interlocked devices in response to changes in the environment and usage patterns, and a method for updating interlocked devices thereof, and the processor may acquire the user's environment information and usage pattern information, detect specific changes in the user based on the environment information and usage pattern information, acquire update information corresponding to the specific changes, selects a first device corresponding to the update information and a second device interlocked therewith, and update the first device and the second device interlocked therewith based on the acquired update information.

## Description

### [Technical Field]

The present disclosure relates to an artificial intelligence apparatus capable of updating interlocked devices in response to changes in the environment and usage patterns, and a method for updating interlocked devices thereof.

### [Background Art]

In general, artificial intelligence is a field of computer engineering and information technology that studies how to enable computers to think, learn, and develop themselves in ways that human intelligence can do, and means that computers can imitate human intelligent behavior.

In addition, artificial intelligence does not exist in itself, but is directly or indirectly related to other fields of computer science. In particular, in modern times, attempts are being made to introduce artificial intelligence elements into various fields of information technology and utilize artificial intelligence elements to solve problems in those fields.

Meanwhile, technology is being studied to use artificial intelligence to recognize and learn the surrounding situation, provide the information the user wants in the desired format, or perform actions or functions desired by the user.

In addition, an electronic device that provides these various operations and functions can be referred to as an artificial intelligence apparatus.

Meanwhile, if the usage environment or usage pattern of the home appliance changes, the user can directly update the function of the home appliance or request an update from the product service center.

However, if an update for a specific home appliance was completed, users had the inconvenience of having to individually update other home appliances that were interlocked with the specific home appliance.

Therefore, in the future, it is necessary to develop an artificial intelligence apparatus that can detect changes in the user's environment and usage patterns and automatically update devices interlocked with each other in response to the detected changes in the environment and usage patterns.

### [Disclosure]

### [Technical Problem]

An object of the present disclosure is to solve the above-mentioned problems and other problems.

An object of the present disclosure is to provide an artificial intelligence apparatus which can provide user convenience and satisfaction by detecting specific changes in the user based on the user's environment information and usage pattern information, acquiring update information corresponding to the specific changes in the user, and automatically updating a first device and a second device interlocked therewith and a method for updating an interlocked device thereof.

### [Technical Solution]

An artificial intelligence apparatus according to an embodiment of the present disclosure includes a communication part communicating with a plurality of devices; a memory storing update information on the plurality of devices; and, a processor updating devices that are interlocked in response to changes in the user's environment and usage pattern, in which the processor may acquire the user's environment information and usage pattern information, detect specific changes in the user based on the environment information and usage pattern information, acquire update information corresponding to the specific changes, selects a first device corresponding to the update information and a second device interlocked therewith, and update the first device and the second device interlocked therewith based on the acquired update information.

A method for updating an interlocked device of an artificial intelligence apparatus according to an embodiment of the present disclosure may include acquiring user's environment information and usage pattern information; detecting a specific change of the user based on the environment information and usage pattern information; acquiring update information corresponding to the specific change; selecting a first device corresponding to the update information and a second device interlocked therewith; and updating the first device and the second device interlocked therewith based on the acquired update information.

### [Advantageous Effect]

According to one embodiment of the present disclosure, an artificial intelligence apparatus detects specific changes in a user based on the user's environment information and usage pattern information, acquires update information corresponding to the specific changes in the user, and automatically updates a first device and a second device interlocked therewith, thereby continuously providing convenience and satisfaction to the user.

### [Description of Drawings]

FIG. 1 illustrates an artificial intelligence apparatus according to an embodiment of the present disclosure.
FIG. 2 illustrates an artificial intelligence server according to an embodiment of the present disclosure.
FIG. 3 illustrates an artificial intelligence system according to an embodiment of the present disclosure.
FIG. 4 is a view for explaining a processor of an artificial intelligence apparatus according to one embodiment of the present disclosure.
FIG. 5 is a view for explaining a process for updating an interlocked device of an artificial intelligence apparatus according to an embodiment of the present disclosure.
FIG. 6 is a view for explaining a process for updating an interlocked device of an artificial intelligence apparatus according to another embodiment of the present disclosure.
FIGS. 7 to 10 are views for explaining a process of selecting a first device and a second device interlocked therewith corresponding to update information of an artificial intelligence apparatus according to an embodiment of the present disclosure.
FIGS. 11 to 13 are views for explaining a process of providing update notifications of an artificial intelligence apparatus according to one embodiment of the present disclosure.
FIG. 14 and FIG. 15 are flowcharts for explaining a method for updating an interlocked device of an artificial intelligence apparatus according to an embodiment of the present disclosure.
FIG. 16 is a view for explaining a condition table for user-specific change detection of an artificial intelligence apparatus according to one embodiment of the present disclosure.
FIG. 17 and FIG. 18 are views for explaining a user-specific change prediction process of an artificial intelligence apparatus according to one embodiment of the present disclosure.

### [Best Mode]

Hereinafter, embodiments of the present disclosure are described in more detail with reference to accompanying drawings and regardless of the drawings symbols, same or similar components are assigned with the same reference numerals and thus overlapping descriptions for those are omitted. The suffixes "module" and "unit" for components used in the description below are assigned or mixed in consideration of easiness in writing the specification and do not have distinctive meanings or roles by themselves. In the following description, detailed descriptions of well-known functions or constructions will be omitted since they would obscure the disclosure in unnecessary detail. Additionally, the accompanying drawings are used to help easily understanding embodiments disclosed herein but the technical idea of the present disclosure is not limited thereto. It should be understood that all of variations, equivalents or substitutes contained in the concept and technical scope of the present disclosure are also included.

It will be understood that the terms "first" and "second" are used herein to describe various components but these components should not be limited by these terms. These terms are used only to distinguish one component from other components.

In this disclosure below, when one part (or element, device, etc.) is referred to as being 'connected' to another part (or element, device, etc.), it should be understood that the former can be 'directly connected' to the latter, or 'electrically connected' to the latter via an intervening part (or element, device, etc.). It will be further understood that when one component is referred to as being 'directly connected' or 'directly interlocked' to another component, it means that no intervening component is present.

Also, throughout this specification, a neural network and a network function may be used interchangeably. The neural network may be constituted by a set of interlocked computational units, which may be generally referred to as "nodes". These "nodes" may also be referred to as "neurons". The neural network is configured to include at least two or more nodes. Nodes (or neurons) constituting neural networks may be interlocked by one or more "links".

### <Artificial Intelligence (AI)>

Artificial intelligence refers to the field of studying artificial intelligence or methodology for making artificial intelligence, and machine learning refers to the field of defining various issues dealt with in the field of artificial intelligence and studying methodology for solving the various issues. Machine learning is defined as an algorithm that enhances the performance of a certain task through a steady experience with the certain task.

An artificial neural network (ANN) is a model used in machine learning and may mean a whole model of problem-solving ability which is composed of artificial neurons (nodes) that form a network by synaptic connections. The artificial neural network can be defined by a connection pattern between neurons in different layers, a learning process for updating model parameters, and an activation function for generating an output value.

The artificial neural network may include an input layer, an output layer, and optionally one or more hidden layers. Each layer includes one or more neurons, and the artificial neural network may include a synapse that links neurons to neurons. In the artificial neural network, each neuron may output the function value of the activation function for input signals, weights, and deflections input through the synapse.

Model parameters refer to parameters determined through learning and include a weight value of synaptic connection and deflection of neurons. A hyperparameter means a parameter to be set in the machine learning algorithm before learning, and includes a learning rate, a repetition number, a mini batch size, and an initialization function.

The purpose of the learning of the artificial neural network may be to determine the model parameters that minimize a loss function. The loss function may be used as an index to determine optimal model parameters in the learning process of the artificial neural network.

Machine learning may be classified into supervised learning, unsupervised learning, and reinforcement learning according to a learning method.

The supervised learning may refer to a method of training an artificial neural network in a state in which a label for learning data is given, and the label may mean the correct answer (or result value) that the artificial neural network must infer when the learning data is input to the artificial neural network. The unsupervised learning may refer to a method of training an artificial neural network in a state in which a label for learning data is not given. The reinforcement learning may refer to a learning method in which an agent defined in a certain environment learns to select a behavior or a behavior sequence that maximizes cumulative compensation in each state.

Machine learning, which is implemented as a deep neural network (DNN) including a plurality of hidden layers among artificial neural networks, is also referred to as deep learning, and the deep learning is part of machine learning. In the following, machine learning is used to mean deep learning.

### <Robot>

A robot may refer to a machine that automatically processes or operates a given task by its own ability. In particular, a robot having a function of recognizing an environment and performing a self-determination operation may be referred to as an intelligent robot.

Robots may be classified into industrial robots, medical robots, home robots, military robots, and the like according to the use purpose or field.

The robot includes a driving unit may include an actuator or a motor and may perform various physical operations such as moving a robot joint. In addition, a movable robot may include a wheel, a brake, a propeller, and the like in a driving unit, and may travel on the ground through the driving unit or fly in the air.

### <Self-Driving>

Self-driving refers to a technique of driving for oneself, and a self-driving vehicle refers to a vehicle that travels without an operation of a user or with a minimum operation of a user.

For example, the self-driving may include a technology for maintaining a lane while driving, a technology for automatically adjusting a speed, such as adaptive cruise control, a technique for automatically traveling along a predetermined route, and a technology for automatically setting and traveling a route when a destination is set.

The vehicle may include a vehicle having only an internal combustion engine, a hybrid vehicle having an internal combustion engine and an electric motor together, and an electric vehicle having only an electric motor, and may include not only an automobile but also a train, a motorcycle, and the like.

In this case, the self-driving vehicle may be regarded as a robot having a self-driving function.

### <eXtended Reality (XR)>

Extended reality is collectively referred to as virtual reality (VR), augmented reality (AR), and mixed reality (MR). The VR technology provides a real-world object and background only as a CG image, the AR technology provides a virtual CG image on a real object image, and the MR technology is a computer graphic technology that mixes and combines virtual objects into the real world.

The MR technology is similar to the AR technology in that the real object and the virtual object are illustrated together. However, in the AR technology, the virtual object is used in the form that complements the real object, whereas in the MR technology, the virtual object and the real object are used in an equal manner.

The XR technology may be applied to a head-mount display (HMD), a head-up display (HUD), a mobile phone, a tablet PC, a laptop, a desktop, a TV, a digital signage, and the like. A device to which the XR technology is applied may be referred to as an XR device.

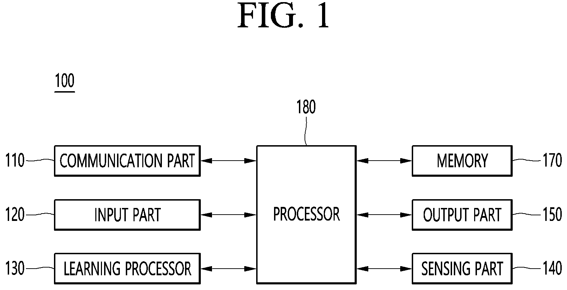

FIG. 1 illustrates an AI device 100 according to an embodiment of the present disclosure.

The AI device (or an AI apparatus) 100 may be implemented by a stationary device or a mobile device, such as a TV, a projector, a mobile phone, a smartphone, a desktop computer, a notebook, a digital broadcasting terminal, a personal digital assistant (PDA), a portable multimedia player (PMP), a navigation device, a tablet PC, a wearable device, a set-top box (STB), a DMB receiver, a radio, a washing machine, a refrigerator, a desktop computer, a digital signage, a robot, a vehicle, and the like.

Referring to FIG. 1, the AI device 100 may include a communication part 110, an input unit 120, a learning processor 130, a sensing unit 140, an output unit 150, a memory 170, and a processor 180.

The communication part 110 may transmit and receive data to and from external devices such as other AI devices 100a to 100e and the AI server 200 by using wire/wireless communication technology. For example, the communication part 110 may transmit and receive sensor information, a user input, a learning model, and a control signal to and from external devices.

The communication technology used by the communication part 110 includes GSM (Global System for Mobile communication), CDMA (Code Division Multi Access), LTE (Long Term Evolution), 5G, WLAN (Wireless LAN), Wi-Fi (Wireless-Fidelity), Bluetooth^{™}, RFID (Radio Frequency Identification), Infrared Data Association (IrDA), ZigBee, NFC (Near Field Communication), and the like.

The input unit 120 may acquire various kinds of data.

In this case, the input unit 120 may include a camera for inputting a video signal, a microphone for receiving an audio signal, and a user input unit for receiving information from a user. The camera or the microphone may be treated as a sensor, and the signal acquired from the camera or the microphone may be referred to as sensing data or sensor information.

The input unit 120 may acquire a learning data for model learning and an input data to be used if an output is acquired by using learning model. The input unit 120 may acquire raw input data. In this case, the processor 180 or the learning processor 130 may extract an input feature by preprocessing the input data.

The learning processor 130 may learn a model composed of an artificial neural network by using learning data. The learned artificial neural network may be referred to as a learning model. The learning model may be used to an infer result value for new input data rather than learning data, and the inferred value may be used as a basis for determination to perform a certain operation.

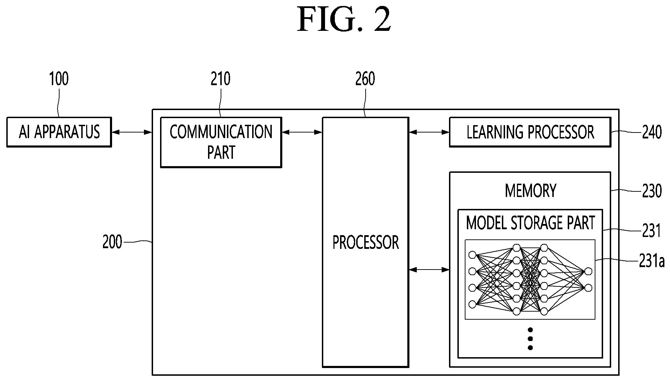

At this time, the learning processor 130 may perform AI processing together with the learning processor 240 of the AI server 200 of FIG. 2.

At this time, the learning processor 130 may include a memory integrated or implemented in the AI device 100. Alternatively, the learning processor 130 may be implemented by using the memory 170, an external memory directly connected to the AI device 100, or a memory held in an external device.

The sensing unit 140 may acquire at least one of internal information on the AI device 100, ambient environment information on the AI device 100, and user information by using various sensors.

Examples of the sensors included in the sensing unit 140 may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar, and a radar.

The output unit 150 may generate an output related to a visual sense, an auditory sense, or a haptic sense.

At this time, the output unit 150 may include a display unit for outputting time information, a speaker for outputting auditory information, and a haptic module for outputting haptic information.

The memory 170 may store data that supports various functions of the AI device 100. For example, the memory 170 may store input data acquired by the input unit 120, learning data, a learning model, a learning history, and the like.

The processor 180 may determine at least one executable operation of the AI device 100 based on information determined or generated by using a data analysis algorithm or a machine learning algorithm. The processor 180 may control the components of the AI device 100 to execute the determined operation.

To this end, the processor 180 may request, search, receive, or utilize data of the learning processor 130 or the memory 170. The processor 180 may control the components of the AI device 100 to execute the predicted operation or the operation determined to be desirable among the at least one executable operation.

When the connection of an external device is required to perform the determined operation, the processor 180 may generate a control signal for controlling the external device and may transmit the generated control signal to the external device.

The processor 180 may acquire intention information for the user input and may determine the user's requirements based on the acquired intention information.

The processor 180 may acquire the intention information corresponding to the user input by using at least one of a speech to text (STT) engine for converting speech input into a text string or a natural language processing (NLP) engine for acquiring intention information of a natural language.

At least one of the STT engine or the NLP engine may be configured as an artificial neural network, at least part of which is learned according to the machine learning algorithm. At least one of the STT engine or the NLP engine may be learned by the learning processor 130, may be learned by the learning processor 240 of the AI server 200, or may be learned by their distributed processing.

The processor 180 may collect history information including the operation contents of the AI apparatus 100 or the user's feedback on the operation and may store the collected history information in the memory 170 or the learning processor 130 or transmit the collected history information to the external device such as the AI server 200. The collected history information may be used to update the learning model.

The processor 180 may control at least part of the components of AI device 100 so as to drive an application program stored in the memory 170. Furthermore, the processor 180 may operate two or more of the components included in the AI device 100 in combination so as to drive the application program.

FIG. 2 illustrates an AI server 200 according to an embodiment of the present disclosure.

Referring to FIG. 2, the AI server 200 may refer to a device that learns an artificial neural network by using a machine learning algorithm or uses a learned artificial neural network/ The AI server 200 may include a plurality of servers to perform distributed processing or may be defined as a 5G network. In this case, the AI server 200 may be included as a partial configuration of the AI device 100, and may perform at least part of the AI processing together.

The AI server 200 may include a communication part 210, a memory 230, a learning processor 240, a processor 260, and the like.

The communication part 210 may transmit and receive data to and from an external device such as the AI device 100.

The memory 230 may include a model storage unit 231. The model storage unit 231 may store a learning or learned model (or an artificial neural network 231a) through the learning processor 240.

The learning processor 240 may learn the artificial neural network 231a by using the learning data. The learning model may be used in a state of being mounted on the AI server 200 of the artificial neural network, or may be used in a state of being mounted on an external device such as the AI device 100.

The learning model may be implemented in hardware, software, or a combination of hardware and software. If all or part of the learning models are implemented in software, one or more instructions that constitute the learning model may be stored in memory 230.

The processor 260 may infer the result value for new input data by using the learning model and may generate a response or a control command based on the inferred result value.

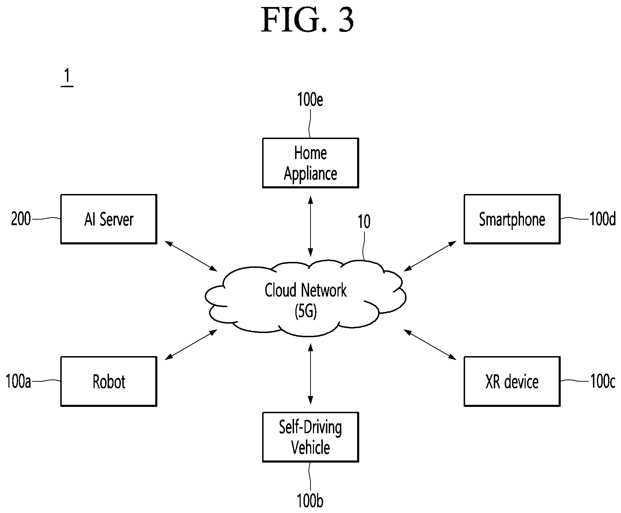

FIG. 3 is a view of an AI system 1 according to an embodiment of the present disclosure.

Referring to FIG. 3, in the AI system 1, at least one of an AI server 200, a robot 100a, a self-driving vehicle 100b, an XR device 100c, a smartphone 100d, or a home appliance 100e is connected to a cloud network 10. The robot 100a, the self-driving vehicle 100b, the XR device 100c, the smartphone 100d, or the home appliance 100e, to which the AI technology is applied, may be referred to as AI devices 100a to 100e.

The cloud network 10 may refer to a network that forms part of a cloud computing infrastructure or exists in a cloud computing infrastructure. The cloud network 10 may be configured by using a 3G network, a 4G or LTE network, or a 5G network.

In other words, the devices 100a to 100e and 200 configuring the AI system 1 may be connected to each other through the cloud network 10. In particular, each of the devices 100a to 100e and 200 may communicate with each other through a base station, but may directly communicate with each other without using a base station.

The AI server 200 may include a server that performs AI processing and a server that performs operations on big data.

The AI server 200 may be connected to at least one of the AI devices constituting the AI system 1, that is, the robot 100a, the self-driving vehicle 100b, the XR device 100c, the smartphone 100d, or the home appliance 100e through the cloud network 10, and may assist at least part of AI processing of the connected AI devices 100a to 100e.

At this time, the AI server 200 may learn the artificial neural network according to the machine learning algorithm instead of the AI devices 100a to 100e, and may directly store the learning model or transmit the learning model to the AI devices 100a to 100e.

At this time, the AI server 200 may receive input data from the AI devices 100a to 100e, may infer the result value for the accommodated input data by using the learning model, may generate a response or a control command based on the inferred result value, and may transmit the response or the control command to the AI devices 100a to 100e.

Alternatively, the AI devices 100a to 100e may infer the result value for the input data by directly using the learning model, and may generate the response or the control command based on the inference result.

Hereinafter, various embodiments of the AI devices 100a to 100e to which the above-described technology is applied will be described. The AI devices 100a to 100e illustrated in FIG. 3 may be regarded as a specific embodiment of the AI device 100 illustrated in FIG. 1.

### <AI + Robot>

The robot 100a, to which the AI technology is applied, may be implemented as a guide robot, a carrying robot, a cleaning robot, a wearable robot, an entertainment robot, a pet robot, an unmanned flying robot, or the like.

The robot 100a may include a robot control module for controlling the operation, and the robot control module may refer to a software module or a chip implementing the software module by hardware.

The robot 100a may acquire state information on the robot 100a by using sensor information acquired from various kinds of sensors, may detect (recognize) surrounding environment and objects, may generate map data, may determine the route and the travel plan, may determine the response to user interaction, or may determine the operation.

The robot 100a may use the sensor information acquired from at least one sensor among the lidar, the radar, and the camera so as to determine the travel route and the travel plan.

The robot 100a may perform the above-described operations by using the learning model provided as at least one artificial neural network. For example, the robot 100a may recognize the surrounding environment and the objects by using the learning model, and may determine the operation by using the recognized surrounding information or object information. The learning model may be learned directly from the robot 100a or may be learned from an external device such as the AI server 200.

At this time, the robot 100a may perform the operation by generating the result by directly using the learning model, but the sensor information may be transmitted to the external device such as the AI server 200 and the generated result may be accommodated to perform the operation.

The robot 100a may use at least one of the map data, the object information detected from the sensor information, or the object information acquired from the external apparatus to determine the travel route and the travel plan, and may control the driving unit such that the robot 100a travels along the determined travel route and travel plan.

The map data may include object identification information on various objects arranged in the space in which the robot 100a moves. For example, the map data may include object identification information on fixed objects such as walls and doors and movable objects such as pollen and desks. The object identification information may include a name, a type, a distance, and a position.

In addition, the robot 100a may perform the operation or travel by controlling the driving unit based on the control/interaction of the user. At this time, the robot 100a may acquire the intention information of the interaction due to the user's operation or speech utterance, and may determine the response based on the acquired intention information, and may perform the operation.

### <AI + Self-Driving>

The self-driving vehicle 100b, to which the AI technology is applied, may be implemented as a mobile robot, a vehicle, an unmanned flying vehicle, or the like.

The self-driving vehicle 100b may include a self-driving control module for controlling a self-driving function, and the self-driving control module may refer to a software module or a chip implementing the software module by hardware. The self-driving control module may be included in the self-driving vehicle 100b as a component thereof, but may be implemented with separate hardware and connected to the outside of the self-driving vehicle 100b.

The self-driving vehicle 100b may acquire state information on the self-driving vehicle 100b by using sensor information acquired from various kinds of sensors, may detect (recognize) surrounding environment and objects, may generate map data, may determine the path and the travel plan, or may determine the operation.

Like the robot 100a, the self-driving vehicle 100b may use the sensor information acquired from at least one sensor among the lidar, the radar, and the camera so as to determine the travel path and the travel plan.

In particular, the self-driving vehicle 100b may recognize the environment or objects for an area covered by a field of view or an area over a certain distance by receiving the sensor information from external devices, or may receive directly recognized information from the external devices.

The self-driving vehicle 100b may perform the above-described operations by using the learning model composed of at least one artificial neural network. For example, the self-driving vehicle 100b may recognize the surrounding environment and the objects by using the learning model, and may determine the traveling movement line by using the recognized surrounding information or object information. The learning model may be learned directly from the self-driving vehicle 100a or may be learned from an external device such as the AI server 200.

In this case, the self-driving vehicle 100b may perform the operation by generating the result by directly using the learning model, but the sensor information may be transmitted to the external device such as the AI server 200 and the generated result may be received to perform the operation.

The self-driving vehicle 100b may use at least one of the map data, the object information detected from the sensor information, or the object information acquired from the external apparatus to determine the travel path and the travel plan, and may control the driving device such that the self-driving vehicle 100b travels along the determined travel path and travel plan.

The map data may include object identification information on various objects arranged in the space (for example, road) in which the self-driving vehicle 100b travels. For example, the map data may include object identification information on fixed objects such as street lamps, rocks, and buildings and movable objects such as vehicles and pedestrians. The object identification information may include a name, a type, a distance, and a position.

In addition, the self-driving vehicle 100b may perform the operation or travel by controlling the driving device based on the control/interaction of the user. In this case, the self-driving vehicle 100b may acquire the intention information of the interaction due to the user's operation or speech utterance, and may determine the response based on the acquired intention information, and may perform the operation.

### <AI+XR>

The XR device 100c, to which the AI technology is applied, may be implemented by a head-mount display (HMD), a head-up display (HUD) provided in the vehicle, a television, a mobile phone, a smartphone, a computer, a wearable device, a home appliance, a digital signage, a vehicle, a fixed robot, a mobile robot, or the like.

The XR device 100c may analyzes three-dimensional point cloud data or image data acquired from various sensors or the external devices, generate position data and attribute data for the three-dimensional points, acquire information on the surrounding space or the real object, and render to output the XR object to be output. For example, the XR device 100c may output an XR object including the additional information on the recognized object in correspondence to the recognized object.

The XR device 100c may perform the above-described operations by using the learning model composed of at least one artificial neural network. For example, the XR device 100c may recognize the real object from the three-dimensional point cloud data or the image data by using the learning model, and may provide information corresponding to the recognized real object. The learning model may be directly learned from the XR device 100c, or may be learned from the external device such as the AI server 200.

In this case, the XR device 100c may perform the operation by generating the result by directly using the learning model, but the sensor information may be transmitted to the external device such as the AI server 200 and the generated result may be received to perform the operation.

### <AI + Robot + Self-Driving>

The robot 100a, to which the AI technology and the self-driving technology are applied, may be implemented as a guide robot, a carrying robot, a cleaning robot, a wearable robot, an entertainment robot, a pet robot, an unmanned flying robot, or the like.

The robot 100a, to which the AI technology and the self-driving technology are applied, may refer to the robot itself having the self-driving function or the robot 100a interacting with the self-driving vehicle 100b.

The robot 100a having the self-driving function may collectively refer to a device that moves for itself along the given movement line without the user's control or moves for itself by determining the movement line by itself.

The robot 100a and the self-driving vehicle 100b having the self-driving function may use a common sensing method so as to determine at least one of the travel route or the travel plan. For example, the robot 100a and the self-driving vehicle 100b having the self-driving function may determine at least one of the travel route or the travel plan by using the information sensed through the lidar, the radar, and the camera.

The robot 100a that interacts with the self-driving vehicle 100b exists separately from the self-driving vehicle 100b and may perform operations interworking with the self-driving function of the self-driving vehicle 100b or interworking with the user who rides on the self-driving vehicle 100b.

At this time, the robot 100a interacting with the self-driving vehicle 100b may control or assist the self-driving function of the self-driving vehicle 100b by acquiring sensor information on behalf of the self-driving vehicle 100b and providing the sensor information to the self-driving vehicle 100b, or by acquiring sensor information, generating environment information or object information, and providing the information to the self-driving vehicle 100b.

Alternatively, the robot 100a interacting with the self-driving vehicle 100b may monitor the user boarding the self-driving vehicle 100b, or may control the function of the self-driving vehicle 100b through the interaction with the user. For example, when it is determined that the driver is in a drowsy state, the robot 100a may activate the self-driving function of the self-driving vehicle 100b or assist the control of the driving unit of the self-driving vehicle 100b. The function of the self-driving vehicle 100b controlled by the robot 100a may include not only the self-driving function but also the function provided by the navigation system or the audio system provided in the self-driving vehicle 100b.

Alternatively, the robot 100a that interacts with the self-driving vehicle 100b may provide information or assist the function to the self-driving vehicle 100b outside the self-driving vehicle 100b. For example, the robot 100a may provide traffic information including signal information and the like, such as a smart signal, to the self-driving vehicle 100b, and automatically connect an electric charger to a charging port by interacting with the self-driving vehicle 100b like an automatic electric charger of an electric vehicle.

### <AI + Robot + XR>

The robot 100a, to which the AI technology and the XR technology are applied, may be implemented as a guide robot, a carrying robot, a cleaning robot, a wearable robot, an entertainment robot, a pet robot, an unmanned flying robot, a drone, or the like.

The robot 100a, to which the XR technology is applied, may refer to a robot subjected to control/interaction in an XR image. In this case, the robot 100a may be separated from the XR device 100c and interwork with each other.

If the robot 100a, which is subjected to control/interaction in the XR image, may acquire the sensor information from the sensors including the camera, the robot 100a or the XR device 100c may generate the XR image based on the sensor information, and the XR device 100c may output the generated XR image. The robot 100a may operate based on the control signal input through the XR device 100c or the user's interaction.

For example, the user may confirm the XR image corresponding to the time point of the robot 100a interworking remotely through the external device such as the XR device 100c, adjust the self-driving travel path of the robot 100a through interaction, control the operation or driving, or confirm the information on the surrounding object.

### <AI + Self-Driving + XR>

The self-driving vehicle 100b, to which the AI technology and the XR technology are applied, may be implemented as a mobile robot, a vehicle, an unmanned flying vehicle, or the like.

The self-driving vehicle 100b, to which the XR technology is applied, may refer to a self-driving vehicle having a means for providing an XR image or a self-driving vehicle subjected to control/interaction in an XR image. Particularly, the self-driving vehicle 100b In other words subjected to control/interaction in the XR image may be distinguished from the XR device 100c and interwork with each other.

The self-driving vehicle 100b having the means for providing the XR image may acquire the sensor information from the sensors including the camera and output the generated XR image based on the acquired sensor information. For example, the self-driving vehicle 100b may include an HUD to output an XR image, thereby providing a passenger with a real object or an XR object corresponding to an object in the screen.

In this case, if the XR object is output to the HUD, at least part of the XR object may be outputted so as to overlap the actual object to which the passenger's gaze is directed. Meanwhile, if the XR object is output to the display provided in the self-driving vehicle 100b, at least part of the XR object may be output so as to overlap the object in the screen. For example, the self-driving vehicle 100b may output XR objects corresponding to objects such as a lane, another vehicle, a traffic light, a traffic sign, a two-wheeled vehicle, a pedestrian, a building, and the like.

If the self-driving vehicle 100b, which is subjected to control/interaction in the XR image, may acquire the sensor information from the sensors including the camera, the self-driving vehicle 100b or the XR device 100c may generate the XR image based on the sensor information, and the XR device 100c may output the generated XR image. The self-driving vehicle 100b may operate based on the control signal input through the external device such as the XR device 100c or the user's interaction.

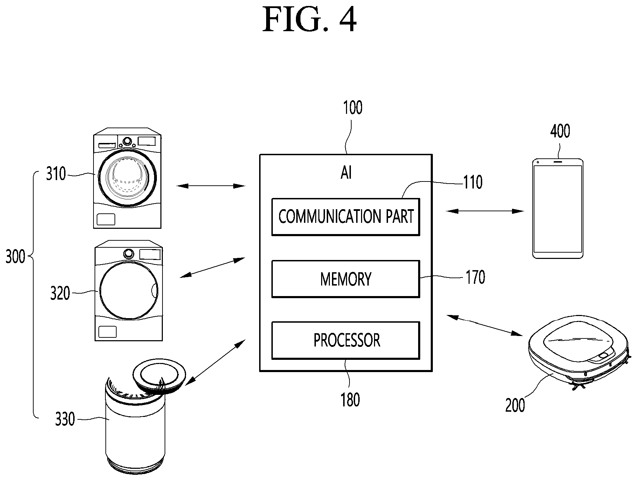

FIG. 4 is a view for explaining a processor of an artificial intelligence apparatus according to one embodiment of the present disclosure.

As illustrated in FIG. 4, the artificial intelligence apparatus 100 of the present disclosure may include a communication part 110 that is communicatively connected to a plurality of devices, a memory 170 that stores update information for the plurality of devices, and a processor 180 that updates devices that are interlocked with each other in response to changes in the user's environment and usage patterns.

The processor 180 may acquire user's environment information and usage pattern information, detect specific changes in the user based on the environment information and usage pattern information, acquire update information corresponding to the specific changes, select a first device and a second device interlocked therewith corresponding to the update information, and update the first device and the second device interlocked therewith based on the acquired update information.

Here, when acquiring the user's environment information, the processor 180 can acquire the user's environment information from an autonomous mobile device 200 among a plurality of devices.

An autonomous mobile device 200 includes at least one of a camera that acquires image information of an object located indoors, a microphone that acquires sound information of an object located indoors, and a sensor that senses an object located indoors to acquire sensor information, and can detect changes in the indoor environment while autonomously moving indoors.

As an example, the autonomous mobile device 200 may include a robot vacuum cleaner, but this is only an example and is not limited thereto.

Additionally, the user's environmental information may include the user's family member information and the user's indoor environmental information.

For example, the user's family member information may include at least one of a person and a pet located indoors, but this is only an example and is not limited thereto.

As another example, the user's indoor environment information may include the location of objects placed in the indoor space, the material of the indoor floor, the indoor temperature, the indoor humidity, and the current residence location, but this is only an example and is not limited thereto.

Next, when acquiring user's usage pattern information, the processor 180 can acquire user's usage pattern information from an autonomous mobile device 200 and a fixed device 300 among a plurality of devices.

Here, when a first user input is received, the autonomous mobile device 200 performs a first operation while autonomously moving indoors in response to the first user input, and can detect a change in the user's usage pattern based on the first user input.

In addition, when a second user input is received, the fixed device 300 is fixed to a predetermined location indoors and performs a second operation corresponding to the second user input, and can detect a change in the user's usage pattern based on the second user input.

For example, the autonomous mobile device 200 may include a robot vacuum cleaner, and the fixed device 300 may include a washing machine 310, a dryer 320, a clothes manager, a refrigerator, an air purifier 330, an air conditioner, a TV, or the like, but this is only an example and is not limited thereto.

Additionally, the user's usage pattern information may include usage setting information that the user inputs into the device to be operated.

Next, the processor 180, when detecting a specific change in the user, if acquiring at least one of the user's environment information and usage pattern information, can match and store the acquired information with the device that provided the information, check whether there is new information different from existing information among the information stored for each device, and if there is new information, check whether the new information is repeatedly acquired a preset number of times or more during a preset period, and if the new information is repeatedly acquired a preset number of times or more, detect a specific change in the user based on the new information.

Here, when storing the acquired information, the processor 180 may acquire identification information of a device that provides at least one of the user's environment information and usage pattern information, and may match and store the acquired information and the device that provides the information based on the identification information of the device.

**In** addition, when checking whether new information is repeatedly acquired a preset number of times or more, if new information exists for a specific device, the processor 180 can extract individual setting conditions for the specific device from a pre-stored condition table, and based on a first condition corresponding to a setting period included in the extracted individual setting conditions and a second condition corresponding to the setting number of times, check whether new information is repeatedly acquired a setting number of times or more of the second condition during the setting period of the first condition.

For example, the condition table may be stored with individual setting condition information including a first condition corresponding to a setting period for each device and a second condition corresponding to a setting number of times.

Here, individual setting conditions for each device may differ according to the frequency of use of the device.

In other words, the individual setting conditions for each device can be determined under the condition that the setting period becomes shorter and the number of settings increases as the frequency of use of the device increases, and the setting period becomes longer and the number of settings decreases as the frequency of use of the device decreases.

In addition, the processor 180 can acquire operation information from devices, accumulate and store operation information for each device for a certain period of time, determine individual setting conditions for each device based on the accumulated and stored operation information for each device, and generate a condition table including the individual setting conditions determined for each device.

Here, the processor 180 may determine a condition such that, when determining individual setting conditions for each device, the setting period becomes shorter and the number of settings increases as the frequency of use of the device increases, and the setting period becomes longer and the number of settings decreases as the frequency of use of the device decreases.

Additionally, the processor 180, when detecting a user's specific change, if the new information is information on a new family member of the user, can detect specific changes in the user, such as the addition of a new family member.

For example, the processor 180 can detect a change in the user's environment in which a new pet is added as a family member if the user's new family member information is a pet, and can detect a change in the user's environment in which a new person is added as a family member if the user's new family member information is a person.

In some cases, the processor 180, when detecting a specific changes in the user, if new information is new indoor environment information of the user, can detect the specific change in the user, such that a new indoor environment is created.

For example, the processor 180 can detect a change in the user's environment in which at least one of the location of an object in which the user's new indoor environment information is placed in an indoor space, the material of an indoor floor, the indoor temperature, the indoor humidity, and the current residence location changes.

In another case, the processor 180, when detecting a specific change in the user, if the new information is the user's device usage pattern information, can detect a specific change in the user that creates a new device usage pattern.

For example, the processor 180 can detect a change in the user's device usage pattern, in which at least one of the device's operation start pattern, operation course selection pattern, operation function selection pattern, and usage frequency pattern changes.

Additionally, the processor 180, when detecting a specific change in the user, can input the user's environmental information and usage pattern information into a pre-learned neural network model to predict the user's specific change.

In addition, the processor 180, when detecting a specific change in the user, can input the user's environmental information into a pre-learned first neural network model to predict the user's first specific change, input the usage pattern information into a pre-learned second neural network model to predict the user's second specific change, and input the predicted first specific change and second specific change into a third neural network model to predict the user's final specific change.

Next, when acquiring update information, the processor 180 can acquire an update solution corresponding to a specific change from the memory 170 or an external server.

Here, the processor 180, when acquiring update information, if detecting a specific change of a user in which a new family member is added, can acquire at least one of a mode solution and a care solution corresponding to the new family member.

For example, the processor 180 may acquire at least one of a pet mode solution and a care solution if the user's new family member information is a pet and may acquire at least one of a mode solution and a care solution corresponding to the age of the person if the user's new family member information is a person.

In some cases, the processor 180, when acquiring update information, if detecting a specific change of the user that creates a new indoor environment, can acquire at least one of the mode solution and the care solution corresponding to the new indoor environment.

For example, the processor 180 may acquire at least one of the corresponding mode solution and care solution if the user's new indoor environment information is at least one of the object location placed in the indoor space, the indoor floor material, the indoor temperature, the indoor humidity, and the current residence location.

In another case, the processor 180, when acquiring update information, if detecting a specific change in the user that creates a new device usage pattern, can acquire a usage pattern mode solution corresponding to the new device usage pattern.

For example, the processor 180 can acquire a corresponding usage pattern mode solution if the user's device usage pattern information is at least one of the device's operation start pattern, operation course selection pattern, operation function selection pattern, and usage frequency pattern.

Next, the processor 180, when selecting a first device and a second device interlocked therewith, can first select at least one first device associated with update information among a plurality of devices, and second select a second device interlocked with the selected first device.

Here, the processor 180, when first selecting the first device, can first select at least one first device capable of performing an operation of a predetermined function through at least one of the mode solution, care solution, and usage pattern mode solution included in the update information.

In addition, the processor 180, when second selecting the second device, can second select at least one second device that has the same purpose as the first device and can operate in a state of being interlocked with each other through update information.

Next, the processor 180, when the first device and the second device are updated, if the first device and the second device are selected, can perform an update by transmitting update information to the first device and the second device, check whether the updates of the first device and the second device are both completed, and terminate the update when the updates of the first device and the second device are both completed.

Here, when the processor 180, when checking whether all updates are completed, can recognize the completion of the update of the corresponding device by receiving an update completion response from the first device and the second device.

In addition, the processor 180, when receiving an update completion response, if the update completion response is not received within a preset first set time, can request an update completion response to a specific device from which the update completion response has not been received, and if the update completion response is not received within a preset first set time, retransmit update information to the specific device to perform a re-update.

Next, the processor 180 can retransmit to a specific device to re-perform the update, if a re-update completion response is not received within a preset second set time, request a re-update completion response from the specific device from which the re-update completion response is not received, and if a re-update completion response is not received from the specific device within a preset second set time, abandon the update for the specific device and generate an update abandonment notification to be transmitted to the specific device.

Here, the update abandonment notification may include a notification message processed in at least one of text, image, and voice formats.

As an example, an update abandonment notification may include a message including information that an update for a particular update solution is abandoned, a brief description of the particular update solution, and the date and time of the update abandonment, but this is only an example and is not limited thereto.

Additionally, the processor 180 may transmit an update abandonment notification to the notification receiving device 400 simultaneously with the specific device if there is a user-specified notification receiving device 400 other than the specific device.

For example, the preset second set time may be set to a longer time than the preset first set time.

In addition, the processor 180, if the update of both the first device and the second device is completed, can generate an update completion notification and transmit the notification to the first device and the second device that have completed the update.

Here, the update completion notification may include a notification message processed in at least one of text, image, and voice formats.

For example, an update completion notification may include a message including information that an update for a particular update solution is complete, a brief description of the particular update solution, and the time and date of the update completion, but this is only an example and is not limited thereto.

In addition, the processor 180, if there is a user-specified notification receiving device 400 other than the first and second devices where the update is completed, can transmit an update completion notification to the notification receiving device 400 simultaneously with the first and second devices.

In addition, the processor 180, if either the first device or the second device completes an update, can generate an update completion notification, and sequentially transmit the update completion notification to each device in accordance with the update completion order of the devices.

Next, the processor 180, if the update is completed, can generate an update completion notification and provide it to the user, acquire recommendation information corresponding to the update, and provide the acquired recommendation information to the user.

In this way, the present disclosure can detect specific changes in the user based on the user's environment information and usage pattern information, acquire update information corresponding to the specific changes in the user, and automatically update the first device and the second device interlocked therewith, thereby continuously providing convenience and satisfaction to the user.

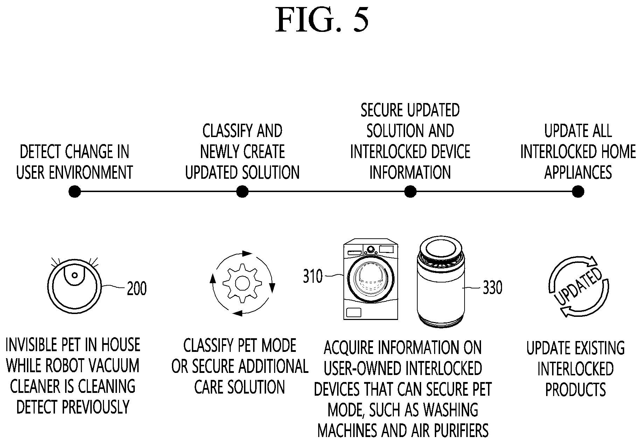

FIG. 5 is a view for explaining a process for updating an interlocked device of an artificial intelligence apparatus according to an embodiment of the present disclosure.

As illustrated in FIG. 5, the present disclosure can acquire user's environment information.

Here, the present disclosure can acquire user's environment information from a robot cleaner, which is an autonomous mobile device 200.

For example, in a case where a robot cleaner, which is an autonomous mobile device 200, detects a previously unseen pet inside the house while performing cleaning while autonomously moving in the house, the present disclosure can acquire environmental information that a pet, which is a new family member of the user, is added from the robot cleaner, which is an autonomous mobile device 200.

Next, the present disclosure can detect specific changes in a user based on environmental information and acquire update information corresponding to the specific changes.

Here, the present disclosure, if the environmental information is a pet, which is a new family member of the user, can detect a specific change in the user which is added as a family member.

In addition, the present disclosure, if detecting a specific change of a user in which a new family member is added, can acquire update information of at least one of the mode solution and the care solution corresponding to the new family member.

For example, the present disclosure may acquire update information on at least one of a pet mode solution and a care solution if the user's new family member information is a pet.

Next, the present disclosure can select a first device and a second device interlocked therewith corresponding to update information, and update the first device and the second device interlocked therewith based on the acquired update information.

Here, the present disclosure may first select a washing machine 310 associated with update information among a plurality of devices as a first device, and second select an air purifier 330 interlocked with the washing machine 310 which is the selected first device, as a second device.

In other words, the present disclosure can first select at least one first device capable of performing an operation of a predetermined function through at least one of the mode solution and the care solution included in the update information.

Additionally, the present disclosure can second select at least one second device that has the same purpose as the first device through update information and is operable in a state of being interlocked with each other,

Next, the present disclosure, if the first device and the second device are selected, can perform an update by transmitting update information to the first device and the second device, check whether the updates of both the first device and the second device are completed, and if the updates of both the first device and the second device are completed, terminate the update.

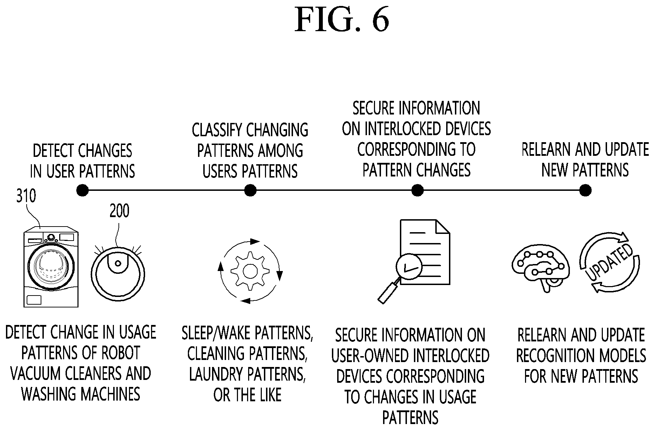

FIG. 6 is a view for explaining a process for updating an interlocked device of an artificial intelligence apparatus according to another embodiment of the present disclosure.

As illustrated in FIG. 6, the present disclosure can acquire user's usage pattern information.

Here, the present disclosure can acquire user's usage pattern information from a robot cleaner 200, which is an autonomous mobile device among a plurality of devices, and a washing machine 310, which is a fixed device.

For example, a robot vacuum cleaner, which is an autonomous mobile device 200, can perform a first operation while autonomously moving indoors in response to the first user input if a first user input is received, and detect a change in the user's usage pattern based on the first user input.

In addition, the washing machine 310, which is a fixed device, can be fixed to a predetermined location indoors and perform a second operation in response to the second user input if a second user input is received, and detect a change in the user's usage pattern based on the second user input.

Next, the present disclosure can detect specific changes in a user based on usage pattern information and acquire update information corresponding to the specific changes.

Here, the present disclosure can detect a specific change in a user that creates a new device usage pattern if the new information is the user's device usage pattern information.

For example, the present disclosure can detect changes in a user's sleeping pattern, waking up pattern, cleaning pattern, laundry pattern, or the like based on information on a user's device usage pattern, including a device operation start pattern, an operation course selection pattern, an operation function selection pattern, and a usage frequency pattern.

In addition, the present disclosure can acquire a usage pattern mode solution corresponding to a new device usage pattern by detecting a specific change of a user that creates a new device usage pattern.

For example, the present disclosure can acquire a corresponding usage pattern mode solution if the user's device usage pattern information is at least one of a device operation start pattern, an operation course selection pattern, an operation function selection pattern, and a usage frequency pattern.

Next, the present disclosure can select a first device corresponding to update information and a second device interlocked therewith, and update the first device and the second device interlocked therewith based on the acquired update information.

Here, the present disclosure can first select a washing machine and a robot cleaner associated with update information among a plurality of devices as first devices, and second select an air purifier interlocked with the washing machine and the robot cleaner which is the selected first devices, as second devices.

In other words, the present disclosure can first select at least one first device capable of performing an operation of a predetermined function through a usage pattern mode solution included in update information.

Additionally, the present disclosure can second select at least one second device that has the same purpose as the first device through update information and is operable in a state of being interlocked with the first device.

Next, the present disclosure, if the first device and the second device are selected, can perform an update by transmitting update information to the first device and the second device, check whether the updates of both the first device and the second device are completed, and if the updates of both the first device and the second device are completed, terminate the update.

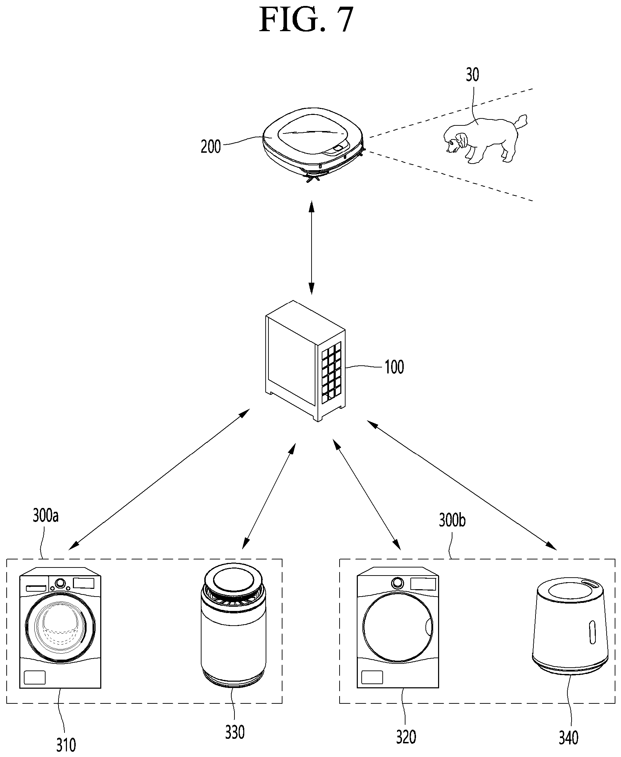

FIGS. 7 to 10 are views for explaining a process of selecting a first device corresponding to update information of an artificial intelligence apparatus according to an embodiment of the present disclosure and a second device interlocked therewith.

As illustrated in FIG. 7, a robot vacuum cleaner which is an autonomous mobile device 200, if detecting a new pet 30 in the house while autonomously moving around the house and performing cleaning, transmit user's environment information on the detected pet 30 to an artificial intelligence apparatus 100.

In addition, the artificial intelligence apparatus 100 can acquire user's environmental information on the pet from the robot vacuum cleaner, which is an autonomous mobile device 200, and detect specific changes in the user's pet that are added as a new family member based on the environmental information.

Next, the artificial intelligence apparatus 100 can acquire update information on at least one of the pet mode solution and the care solution corresponding to the pet which is the new family member.

Next, the present disclosure selects a first device 300a and a second device 300b interlocked therewith corresponding to update information, and can update the first device 300a and the second device 300b interlocked therewith based on the acquired update information.

Here, the present disclosure may first select a washing machine 310 and an air purifier 330 associated with update information among a plurality of devices as the first device 300a, and second select a dryer 320 and a humidifier 340 interlocked with the washing machine 310 and the air purifier 330 which is the selected first device, as the second device 300b.

In other words, the present disclosure can first select at least one first device 300a capable of performing an operation of a predetermined function through at least one of the pet mode solution and the care solution included in the update information.

In addition, the present disclosure can second select at least one second device 300b that has the same purpose the same purpose as the first device 300a through update information and operate in a state of being interlocked with each other.

In this way, the present disclosure, if detecting specific changes in a user, such as the addition of a pet as a new family member, since a pet-only clothing washing environment and a pet-only fur and dust removal environment are important factors, devices capable of pet mode updates corresponding to these factors can be selected, and additional interlocked devices that are interlocked therewith can be selected.

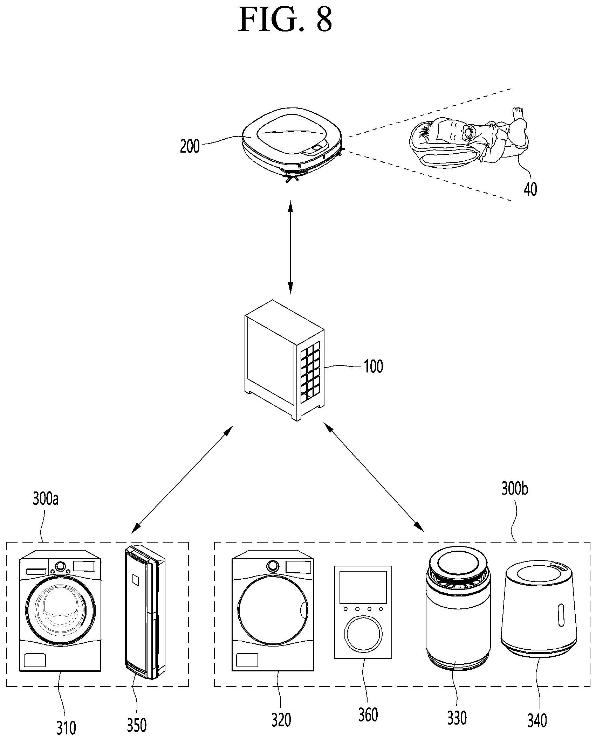

As another example, as illustrated in FIG. 8, a robot cleaner, which is an autonomous mobile device 200, if detecting a baby 40 in the house while autonomously moving in the house and performing cleaning, can transmit user's environment information on the detected baby 40 to an artificial intelligence apparatus 100.

In addition, the artificial intelligence apparatus 100 can acquire user's environmental information on the baby 40 from the robot vacuum cleaner, which is an autonomous mobile device 200, and detect specific changes in the user when the baby is added as a new family member based on the environmental information.

Next, the artificial intelligence apparatus 100 can acquire update information on at least one of the infant mode solution and the care solution corresponding to the baby, which is a new family member.

Next, the present disclosure can select a first device 300a and a second device 300b interlocked therewith corresponding to update information, and update the first device 300a and the second device 300b interlocked therewith based on the acquired update information.

Here, the present disclosure may first select a washing machine 310 and an air conditioner 350 associated with update information among a plurality of devices as first devices 300a, and second select a dryer 320, a heating controller 360, an air purifier 330, and a humidifier 340 interlocked with the washing machine 310 and the air conditioner 350 which are the selected first devices, as second devices 300b.

In other words, the present disclosure can first select at least one first device 300a capable of performing an operation of a predetermined function through at least one of the infant mode solution and the care solution included in the update information.

In addition, the present disclosure can second select at least one second device 300b that has the same purpose as the first device through update information and can operate in a state of being interlocked with the first device 300a.

In this way, the present disclosure, if detecting specific changes in a user in which a baby is added as a new family member, since the an infant-only indoor temperature environment and an infant-only clothing washing environment are important factors, can select devices capable of updating infant modes corresponding to such factors and additionally select interlocked devices that are interlocked therewith.

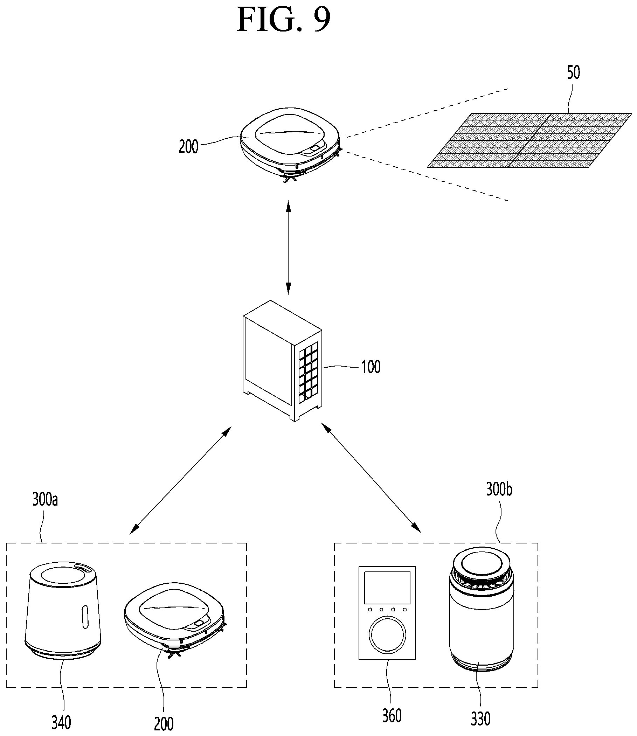

As another example, as illustrated in FIG. 9, a robot cleaner, which is an autonomous mobile device 200, if detecting a new indoor floor material 50 while performing cleaning while autonomously moving indoors, can transmit user's environment information on the new indoor floor material 50 to an artificial intelligence apparatus 100.

In addition, the artificial intelligence apparatus 100 can acquire user's environmental information on indoor floor material 50 from a robot cleaner, which is an autonomous mobile device 200, and detect the user's specific change to a new indoor floor material 50 based on the environmental information.

Next, the artificial intelligence apparatus 100 can acquire update information on at least one of the mode solution and care solution corresponding to the new indoor floor material 50.

Next, the present disclosure may first select a humidifier 340 and a robot cleaner, which is an autonomous mobile device 200, associated with update information among a plurality of devices as first devices, and second select a heating controller 360 and an air purifier 330 interlocked with the humidifier 340 which is the selected first device and the robot cleaner, which are autonomous mobile devices 200, as second devices.

In this way, the present disclosure, if detecting a specific change of the user corresponding to a new indoor floor material 50, since the indoor environment and cleaning environment dedicated to the new indoor floor material are important factors, can select devices capable of updating the indoor floor mode corresponding to these factors, and select additionally interlocked devices interlocked therewith.

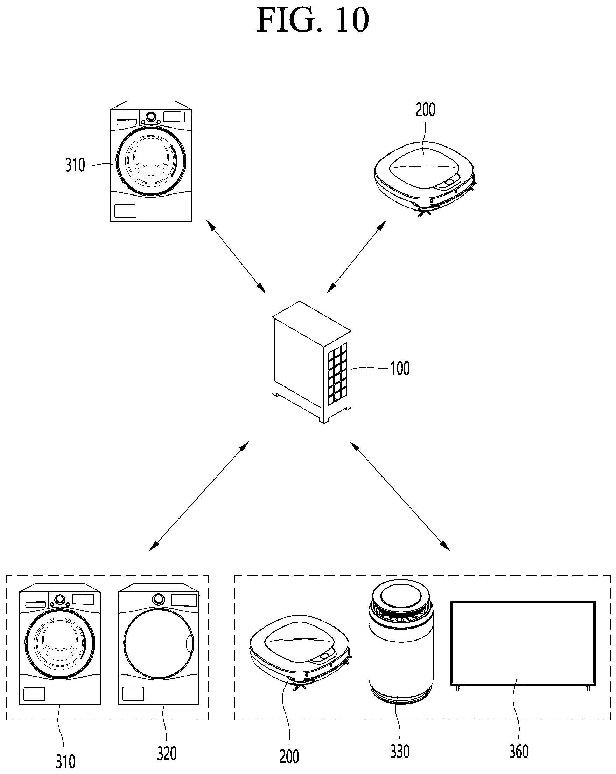

As another example, as illustrated in FIG. 10, the artificial intelligence apparatus 100 of the present disclosure can acquire user's usage pattern information from a robot cleaner, which is an autonomous mobile device 200, and a washing machine, which is a fixed device 310.

Here, if a first user input is received, the autonomous mobile device 200 can perform a first operation while autonomously moving indoors in response to the first user input, and detect a change in the user's usage pattern based on the first user input.

In addition, a fixed device such as a washing machine 310 can be fixed to a predetermined location indoors and perform a second operation in response to the second user input when a second user input is received, and detect a change in the user's usage pattern based on the second user input.

Next, the artificial intelligence apparatus 100 can acquire update information on a usage pattern mode solution corresponding to a new usage pattern.

For example, the artificial intelligence apparatus 100 can acquire a corresponding usage pattern mode solution if the user's device usage pattern information is at least one of the device's operation start pattern, operation course selection pattern, operation function selection pattern, and usage frequency pattern.

Next, the present disclosure may first select a washing machine 310 and a dryer 320 associated with update information among a plurality of devices as first devices, and second select a robot cleaner, an air purifier 330, and a TV 360, which are autonomous mobile devices 200 interlocked with a humidifier 340 and a dryer 320, which are the selected first device, as second devices.

In this way, the present disclosure, if detecting specific changes in a user corresponding to a new usage pattern, since clothing washing patterns, cleaning patterns, indoor activity patterns of the user, and TV viewing patterns of the user corresponding to the new usage pattern are important factors, can select devices capable of updating usage pattern modes corresponding to these factors, and select additional interlocked devices interlocked therewith.

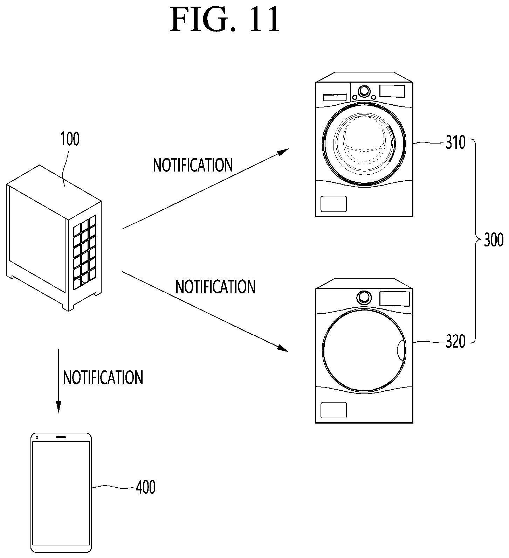

FIGS. 11 to 13 are views for explaining a process of providing update notifications of an artificial intelligence apparatus according to one embodiment of the present disclosure.

As illustrated in FIG. 11, the artificial intelligence apparatus 100 of the present disclosure can transmit update information to a washing machine 310 and a dryer 320 which are the interlocked devices to perform an update, check whether the updates of all the interlocked devices have been completed, and if the updates of all the interlocked devices have been completed, terminate the update.

In addition, the artificial intelligence apparatus 100 can generate an update completion notification when the update of the washing machine 310 and the dryer 320 which are fixed devices 300, is completed and transmit the notification to the washing machine 310 and the dryer 320 that have completed the update.

Here, the update completion notification may include a notification message processed in at least one of text, image, and voice formats.

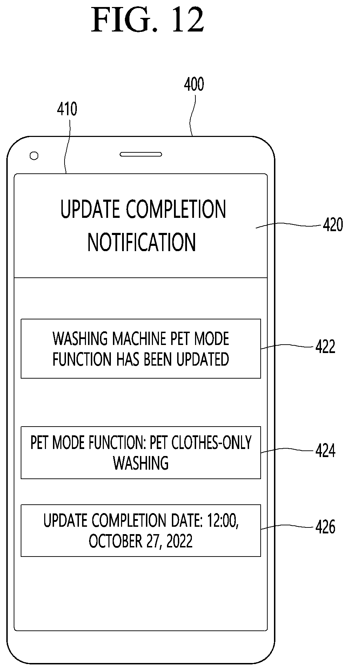

As illustrated in FIG. 12, the present disclosure can transmit an update completion notification 430 to a user-specified notification receiving device 400.

The notification receiving device 400 can display an update completion notification 430 on the display screen 410.

For example, an update completion notification 430 may include a message 432 including information that an update of a specific update solution is complete, a brief description of the specific update solution 434, and an update completion date 436, but this is only an example and is not limited thereto.

In addition, the artificial intelligence apparatus 100, if there is a user-specified notification receiving device 400 other than the washing machine 310 and dryer 320 for which the update has been completed, can transmit an update completion notification to the notification receiving device 400 simultaneously with the washing machine 310 and dryer 320.

In addition, the artificial intelligence apparatus 100, if either the washing machine 310 or the dryer 320 completes an update, can generate an update completion notification and sequentially transmit the update completion notification to the washing machine 310 and the dryer 320 in accordance with the update completion order of the washing machine 310 and the dryer 320.

In addition, the present disclosure, if the update is completed, can generate an update completion notification 430 and provide it to the user, acquire recommendation information corresponding to the update, and provide the acquired recommendation information to the user.

For example, the recommendation information may include related accessories related to the update information, or the like.

Meanwhile, the artificial intelligence apparatus 100, if receiving an update completion response from the interlocked devices, can recognize the completion of an update of a corresponding device.

In addition, the artificial intelligence apparatus 100, if an update completion response is not received within a preset first set time, can request an update completion response from a specific device from which an update completion response has not been received, and if an update completion response is not received from the specific device within a preset first set time, retransmit update information to the specific device to perform a re-update.

Next, the artificial intelligence apparatus 100 can retransmit the update information to a specific device and re-perform the update, if the re-update completion response is not received within a preset second set time, request a re-update completion response from the specific device from which the re-update completion response is not received, and if the re-update completion response is not received from the specific device within a preset second set time, abandon the update for the specific device and generate an update abandonment notification to be transmitted to the specific device.

Here, the update abandonment notification may include a notification message processed in at least one of the text, image, and audio formats.

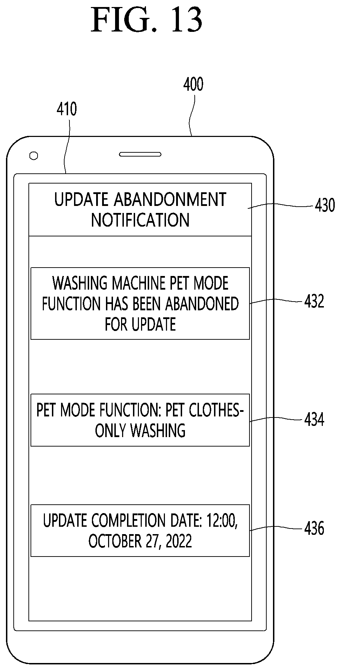

As illustrated in FIG. 13, the present disclosure can transmit an update abandonment notification to a user-specified notification receiving device 400.

The notification receiving device 400 can display an update abandonment notification 420 on the display screen 410.

For example, an update abandonment notification 420 may include a message 422 including information that an update for a specific update solution is abandoned, a brief description of the specific update solution 424, and an update abandonment date and time 426, but this is only an example and is not limited thereto.

In addition, the present disclosure, if there is a user-specified notification receiving device 400 other than the specific device, can transmit an update abandonment notification to the notification receiving device 400 simultaneously with the specific device.

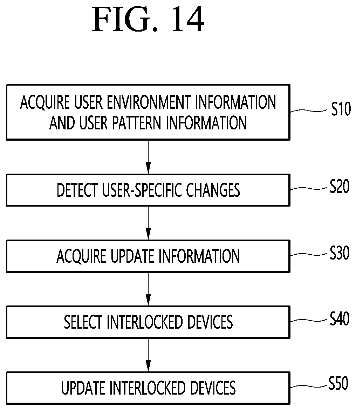

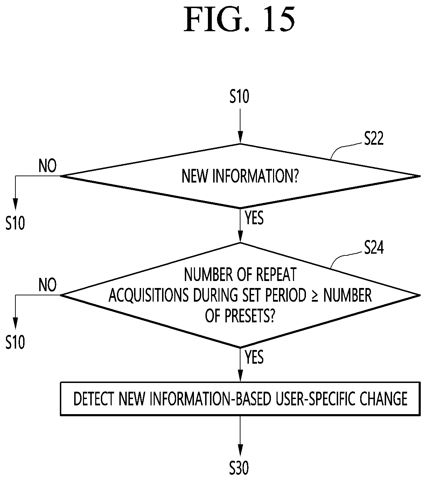

FIG. 14 and FIG. 15 are flowcharts for explaining a method for updating an interlocked device of an artificial intelligence apparatus according to an embodiment of the present disclosure.

As illustrated in FIG. 14, the present disclosure can acquire user's environment information and usage pattern information (S10).

Here, the present disclosure can acquire user's environmental information from an autonomous mobile device.

An autonomous mobile device includes at least one of a camera that acquires image information of an object located indoors, a microphone that acquires sound information of an object located indoors, and a sensor that senses an object located indoors to acquire sensor information, and can detect changes in the indoor environment while autonomously moving indoors.

In addition, the present disclosure can acquire user's usage pattern information from autonomous mobile devices and stationary devices.

Here, the autonomous mobile device, if a first user input is received, can perform a first operation while autonomously moving indoors in response to the first user input, and detect a change in the user's usage pattern based on the first user input.

In addition, when a second user input is received, the fixed device can be fixed to a predetermined location indoors and performs a second operation corresponding to the second user input, and can detect a change in the user's usage pattern based on the second user input.

Next, the present disclosure can detect specific changes in the user based on environmental information and usage pattern information (S20).

Here, the present disclosure, if acquiring at least one of the user's environment information and usage pattern information, can match and store the acquired information with the device that provided the information, check whether there is new information different from existing information among the information stored for each device, and if there is new information, check whether the new information is repeatedly acquired a preset number of times or more during a preset period, and if the new information is repeatedly acquired a preset number of times or more, detect a specific change in the user based on the new information.

Next, the present disclosure can acquire update information corresponding to a specific change (S30).

Here, the present disclosure can acquire an update solution corresponding to a specific change from memory or an external server.

As an example, the present disclosure, if detecting a specific change in a user where a new family member is added, can acquire at least one of a mode solution and a care solution corresponding to the new family member.

In some cases, the present disclosure, if detecting a specific change in the user that creates a new indoor environment, can acquire at least one of a mode solution and a care solution corresponding to the new indoor environment.

In another case, the present disclosure, if detecting a specific change in a user that creates a new device usage pattern, can acquire a usage pattern mode solution corresponding to a new device usage pattern.

In addition, the present disclosure can select a first device and a second device interlocked therewith corresponding to update information (S40).

Here, the present disclosure can first select at least one first device associated with update information among a plurality of devices, and secondly select a second device interlocked with the selected first device.

As an example, the present disclosure may first select at least one first device capable of performing an operation of a predetermined function through at least one of a mode solution, a care solution, and a usage pattern mode solution included in update information.

Additionally, the present disclosure can second select at least one second device that has the same purpose as the first device through update information and is operable in a state of being interlocked with the first device.

Next, the present disclosure can update the first device and the second device interlocked therewith based on the acquired update information (S50).

Here, the present disclosure, if the first device and the second device are selected, can perform an update by transmitting update information to the first device and the second device, check whether the updates of both the first device and the second device are completed, and terminate the update when the updates of both the first device and the second device are completed.

**In** addition, the present disclosure, if the updates of both the first device and the second device are completed, can generate an update completion notification and collectively transmit the notification to the first device and the second device that have completed the update.

Here, the update completion notification may include a notification message processed in at least one of text, image, and voice formats.

**In** addition, the present disclosure, if there are any user-specified notification receiving devices other than the first and second devices that have completed the update, can transmit an update completion notification to a notification receiving device simultaneously with the first and second devices.

As illustrated in FIG. 15, the present disclosure, when detecting a specific change in the user, if acquiring at least one of the user's environment information and usage pattern information, can match and store the acquired information with the device that provides the information, and can check whether there is new information different from existing information among the information stored for each device (S22).

**In** addition, the present disclosure, if new information exists, can check whether new information is repeatedly acquired a preset number of times or more during a preset period of time (S24).

Next, the present disclosure can detect a specific change in the user based on the new information if the new information is repeatedly acquired a preset number of times or more (S26).

Here, the present disclosure, when storing acquired information, can acquire identification information of a device that provides at least one of user's environment information and usage pattern information, and match and store the acquired information and the device that provides the information based on the identification information of the device.

In addition, the present disclosure, when confirming whether new information is repeatedly acquired a preset number of times or more, if new information exists for a specific device, individual setting conditions for the specific device are extracted from a pre-stored condition table, and based on a first condition corresponding to a setting period included in the extracted individual setting conditions and a second condition corresponding to the setting number of times, can check whether new information is repeatedly acquired a preset number of times or more of the second condition during the setting period of the first condition.

In this way, the present disclosure can detect specific changes in the user based on the user's environment information and usage pattern information, acquire update information corresponding to the specific changes in the user, and automatically updates the first device and the second device interlocked therewith, thereby continuously providing convenience and satisfaction to the user.

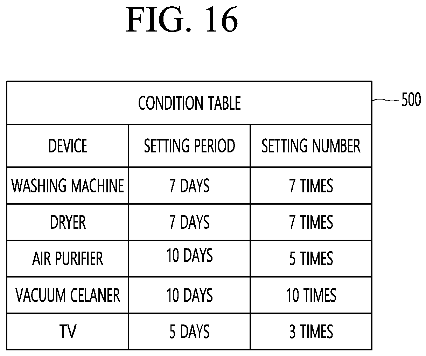

FIG. 16 is a view for explaining a condition table for user-specific change detection of an artificial intelligence apparatus according to one embodiment of the present disclosure.

As illustrated in FIG. 16, the present disclosure can acquire operation information from devices, accumulate and store operation information for each device for a certain period of time, determine individual setting conditions for each device based on the accumulated and stored operation information for each device, and generate a condition table 500 including the individual setting conditions determined for each device.

Here, the present disclosure, when determining individual setting conditions for each device, can determine the individual setting conditions as the condition that the setting period becomes shorter and the number of settings increases as the frequency of use of the device increases, and determine the individual setting conditions as the condition that the setting period becomes longer and the number of settings becomes smaller as the frequency of use of the device decreases.

For example, as illustrated in FIG. 16, the condition table 500 may store individual setting condition information including a first condition corresponding to a setting period for each device and a second condition corresponding to a setting number of times.

Here, individual setting conditions for each device may differ according to the frequency of use of the device.

In other words, the individual setting conditions for each device can be determined as the condition that the setting period becomes shorter and the number of settings increases as the frequency of use of the device increases, and the setting period becomes longer and the number of settings decreases as the frequency of use of the device decreases.

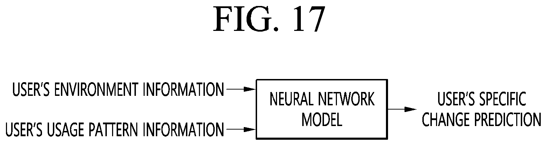

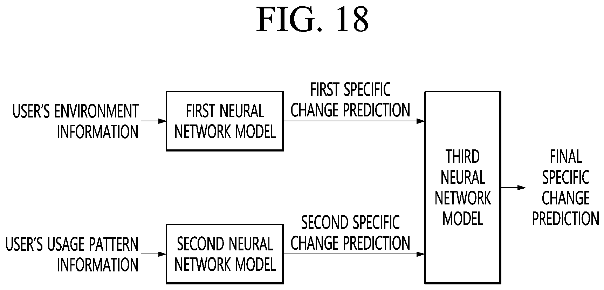

FIG. 17 and FIG. 18 are views for explaining a user-specific change prediction process of an artificial intelligence apparatus according to one embodiment of the present disclosure.

As illustrated in FIG. 17, the present disclosure can predict a specific change in the user by inputting the user's environmental information and usage pattern information into a pre-learned neural network model when detecting a specific change in the user.

In some cases, as illustrated in FIG. 18, when detecting a specific change in the user, the present disclosure may input the user's environmental information into a pre-learned first neural network model to predict the user's first specific change, input the usage pattern information into a pre-learned second neural network model to predict the user's second specific change, and input the predicted first specific change and second specific change into a third neural network model to predict the user's final specific change.

Here, the user's environmental information may include the user's family member information and the user's indoor environmental information.

For example, the user's family member information may include at least one of a person and a pet located indoors, but this is only an example and is not limited thereto.

As another example, the user's indoor environment information may include the location of objects placed in the indoor space, the material of the indoor floor, the indoor temperature, the indoor humidity, and the current residence location, but this is only an example and is not limited thereto.

Additionally, the user's usage pattern information may include usage setting information that the user inputs into the object to be operated.

In addition, the present disclosure can detect a specific change in a user in which a new family member is added if the new information among the user's environment information and usage pattern information is information on a new family member of the user.

In some cases, the present disclosure can detect a specific change in the user that creates a new indoor environment if the new information among the user's environmental information and usage pattern information is the user's new indoor environment information.

In another case, the present disclosure can detect a specific change in a user that creates a new device usage pattern if the new information among the user's environment information and usage pattern information is the user's device usage pattern information.

### [Industrial Applicability]

The artificial intelligence apparatus according to the present disclosure detects specific changes in the user based on the user's environment information and usage pattern information, acquires update information corresponding to the specific changes in the user, and automatically updates the first device and the second device interlocked therewith, thereby providing user convenience and satisfaction, and thus has remarkable industrial applicability.

## Claims

1. An artificial intelligence apparatus comprising:
a communication part communicating with a plurality of devices;
a memory storing update information on the plurality of devices; and,
a processor updating devices that are interlocked in response to changes in the user's environment and usage pattern,
wherein the processor acquires the user's environment information and usage pattern information, detects specific changes in the user based on the environment information and usage pattern information, acquires update information corresponding to the specific changes, selects a first device corresponding to the update information and a second device interlocked therewith, and updates the first device and the second device interlocked therewith based on the acquired update information.

2. The artificial intelligence apparatus of claim 1, wherein the processor, when acquiring the user's environment information, acquires the user's environment information from an autonomous mobile device among the plurality of devices.

3. The artificial intelligence apparatus of claim 2, wherein the user's environment information includes the user's family member information and the user's indoor environment information.

4. The artificial intelligence apparatus of claim 1, wherein the processor, when acquiring the user's usage pattern information, acquires the user's usage pattern information from an autonomous mobile device and a fixed device among the plurality of devices.

5. The artificial intelligence apparatus of claim 4, wherein the user's usage pattern information includes usage setting information that the user inputs into an operation target device.

6. The artificial intelligence apparatus of claim 1,
wherein the processor,
when detecting a specific change in the user, if acquiring at least one of the user's environment information and usage pattern information, matches and stores the acquired information with the device that provided the information, checks whether there is new information different from the existing information among the information stored for each device, and if there is new information, checks whether the new information is repeatedly acquired a preset number of times or more during a preset period, and detects a specific change in the user based on the new information.

7. The artificial intelligence apparatus of claim 6,
wherein the processor,
when storing the acquired information, acquires identification information of a device that provides at least one of the user's environment information and usage pattern information, and matches and stores the acquired information and the device that provides the information based on the identification information of the device.

8. The artificial intelligence apparatus of claim 6,
wherein the processor,
when checking whether the new information is repeatedly acquired a preset number of times or more, if new information exists in a specific device, extracts an individual setting condition for the specific device from a pre-stored condition table, and, based on a first condition corresponding to a setting period included in the extracted individual setting condition and a second condition corresponding to the setting number of times, checks whether the new information is repeatedly acquired a setting number of times or more of the second condition during the setting period of the first condition.

9. The artificial intelligence apparatus of claim 1, wherein the processor, when detecting a specific change of the user, inputs the user's environmental information and usage pattern information into a pre-learned neural network model to predict the specific change of the user.

10. The artificial intelligence apparatus of claim 1, wherein the processor, when acquiring the update information, acquires an update solution corresponding to the specific change from the memory or an external server.

11. The artificial intelligence apparatus of claim 1, wherein the processor, when selecting the first device and the second device interlocked therewith, first selects at least one first device associated with the update information among the plurality of devices, and second selects the second device interlocked with the selected first device.

12. The artificial intelligence apparatus of claim 11, wherein the processor, when first selecting the first device, first selects at least one first device capable of performing an operation of a predetermined function through at least one solution among the mode solution, the care solution, and the usage pattern mode solution included in the update information.

13. The artificial intelligence apparatus of claim 11, wherein the processor, when second selecting the second device, second selects at least one second device that has the same purpose as the first device and is capable of operating in a state of being interlocked with each other through the update information.

14. The artificial intelligence apparatus of claim 1, wherein the processor, when the first device and the second device interlocked therewith are updated, if the first device and the second device are selected, transmits the update information to the first device and the second device to perform the update, checks whether the updates of the first device and the second device are both completed, and if the updates of the first device and the second device are both completed, terminates the update.

15. A method for updating an interlocked device of an artificial intelligence apparatus, comprising:
acquiring user's environment information and usage pattern information;
detecting a specific change of the user based on the environment information and usage pattern information;
acquiring update information corresponding to the specific change;
selecting a first device corresponding to the update information and a second device interlocked therewith; and
updating the first device and the second device interlocked therewith based on the acquired update information.
